# EUROPÄISCHE PATENTSCHRIFT

(11) **EP 0 476 390 B1**
(45) Veröffentlichungstag und Bekanntmachung des Hinweises auf die Patenterteilung: **28.05.1997**
(21) Anmeldenummer: 91114561.3
(22) Anmeldetag: 29.08.1991
(51) Int. Cl.: B60R 25/10, H04Q 7/00, H04B 1/38

(54) **Mobilfunkgerät mit Diebstahlschutz**
Mobile transceiver with anti-theft function
Emetteur-récepteur mobile avec protection antivol

(30) Priorität: 19.09.1990 DE 9013278 U
(43) Veröffentlichungstag der Anmeldung: 25.03.1992
(73) Patentinhaber: SIEMENS AKTIENGESELLSCHAFT, 80333 München (DE)
(72) Erfinder: Hofmann, Jürgen, W-8614 Geiselwind (DE)

(56) Entgegenhaltungen:
- DE-A- 3 908 029
- DE-A- 3 926 983
- US-A- 4 821 309

## Beschreibung

Die Erfindung bezieht sich auf ein Mobilfunkgerät mit in spezieller Weise initiierten Zusatzfunktionen, durch die bei entsprechender Aktivierung bzw. entsprechenden Kriterien Funkverkehr mit einer definierten Gegenstation aufgenommen wird.

Ein solches Mobilfunkgerät ist aus der US-A-4 821 309 bekannt. Diese beschreibt ein Alarmverfahren zur Verhinderung von Fahrzeugdiebstählen, wobei zur Übermittlung des Alarms ein im Fahrzeug befindliches Telefon verwendet wird. Wichtig ist hierfür das Zusammenwirken des Antidiebstahlsystems MSP mit dem Fahrzeug-Telefonsystem MTS.

Ferner ist durch die DE-A-3 908 029 eine Anlage zur Sicherung von Fahrzeugen vor Diebstahl bekannt, die zur Sicherung vor unberechtigtem Anlassen, mit einer außerhalb des Fahrzeugs befindlichen (Polizei)Zentrale zusammenarbeitet und von dort ein Freigabesignal erhält.

Der Erfindung liegt die Aufgabe zugrunde, für ein derartiges Mobilfunkgerät eine Lösung anzugeben zum Schutz vor Benutzung durch unbefugte Personen, insbesondere nach Entwendung des Gerätes in Verbindung mit einer Notruffunktion.

Diese Aufgabe wird gemäß der Erfindung gelöst durch die Realisierung eines Notrufs- und Reaktionssystems derart, daß bei Auftreten bestimmter Kriterien, wie Betätigung einer Notruftaste, Ablauf einer vorgegebenen Meldezeit oder aktivem Aufprallsensor eine definierte Teilnehmernummer angewählt wird und Datentransfer stattfindet und durch die Realisierung eines Diebstahlschutzes derart, daß nach entsprechender Aktivierung das Gerät bei Benutzung mit einer von der zugelassenen Teilnehmernumer abweichenden Nummer bei bestimmten Kriterien eine definierte Telefonnummer anruft und an diese Gegenstation Informationen abgibt für die Ermittlung von Daten des berechtigten und/oder des nichtberechtigten Benutzers des Gerätes.

Vorteilhafte Ausgestaltungen und Weiterbildungen des Erfindungsgegenstandes sind in den Unteransprüchen angegeben.

Nachstehend wird die Erfindung näher erläutert.

Der Besitzer eines Mobiltelefons aktiviert seinen Diebstahlschutz z.B. in der Weise, daß er eine Codenummer im Gerät programmiert. Das Aktivieren des Gerätes kann aber auch durch Verwendung spezieller Software oder Hardware erfolgen. Das Gerät merkt sich dann, daß nur der oder die Teilnehmer mit den zugelassenen Teilnehmernummern mit diesem Gerät telefonieren dürfen. Wird nun das Gerät gestohlen, so läßt der Teilnehmer seine Nummer sperren und der Entwender des Gerätes kann nur noch mit einer anderen Teilnehmernummer telefonieren. Das Gerät stellt dies fest, ruft unter bestimmten Voraussetzungen (z.B. Funkverbindung vorhanden) eine definierte Telefonnummer an und übergibt an die Gegenstation Informationen oder sperrt bzw. verändert seine Funktionsweise (z.B. Anforderung der Eingabe der Codenummer, nach deren Eingabe das Telefonieren erst möglich wird). Die Gegenstation kann beispielsweise ein Service-Zentrum sein, an der z.B. ein Rechner angeschlossen ist, der vom Mobilfunkgerät die Teilnehmernummer des alten Besitzers und die Teilnehmernummer des unberechtigten Benutzers übermittelt bekommt. Selbstverständlich sind zusätzliche oder andere Informationen denkbar. Mit der Teilnehmernummer des Besitzers läßt sich feststellen, ob das Gerät gestohlen wurde oder ob der Besitzer vielleicht aus Versehen eine andere Person telefonieren ließ, ohne vorher den Diebstahlschutz zu deaktivieren. Dieser Vorgang könnte auch beim Entfernen des Mobilfunkgerätes von seinem eingebauten Platz ausgeübt werden, beim Abklemmen der Autobatterie-Dauerspannung, der Unterbrechung einer Schleiferschaltung oder durch eine optische, magnetische oder elektronische Überwachung.

Eine andere vorteilhafte Ausgestaltung besteht in der Realisierung eines Notrufs und Reaktionssystems mit dem Mobilfunkgerät. Hierzu ist vorgesehen, daß das Gerät auf bestimmte Situationen bzw. Kriterien reagiert. Diese können z.B. darin bestehen, daß eine im Gerät vorgesehene Nottaste betätigt wird, eine vorgegebene Meldezeit abgelaufen oder ein Aufprallsensor aktiv ist. Dies bewirkt, daß das Mobilfunkgerät eine definierte Telefonnummer anwählt, worauf wiederum Datentransfer stattfinden kann.

## Patentansprüche

1. Mobilfunkgerät mit in spezieller Weise initiierten Zusatzfunktionen, durch die bei entsprechender Aktivierung bzw. entsprechenden Kriterien Funkverkehr mit einer definierten Gegenstation aufgenommen wird, **gekennzeichnet** durch die Realisierung eines Notrufs- und Reaktionssystems derart, daß bei Auftreten bestimmter Kriterien, wie Betätigung einer Notruftaste, Ablauf einer vorgegebenen Meldezeit oder aktivem Aufprallsensor eine definierte Teilnehmernummer angewählt wird und Datentransfer stattfindet.

2. Mobilfunkgerät mit in spezieller Weise initiierten Zusatzfunktionen durch die bei entsprechender Aktivierung bzw. entsprechenden Kriterien Funkverkehr mit einer definierten Gegenstation aufgenommen wird, **gekennzeichnet** durch die Realisierung eines Diebstahlschutzes derart, daß nach entsprechender Aktivierung das Gerät bei Benutzung mit einer von der zugelassenen Teilnehmernumer abweichenden Nummer bei bestimmten Kriterien eine definierte Telefonnummer anruft und an diese Gegenstation Informationen abgibt für die Ermittlung von Daten des berechtigten und/oder des nichtberechtigten Benutzers des Gerätes.

3. Mobilfunkgerät nach Anspruch 2, dadurch **gekennzeichnet**, daß die Aktivierung des Diebstahlschutzes durch Programmierung einer Codenummer im Gerät erfolgt.

4. Mobilfunkgerät nach Anspruch 2, dadurch **gekennzeichnet**, daß das Aktivieren des Diebstahlschutzes mittels spezieller Software oder Hardware erfolgt.

5. Mobilfunkgerät nach Anspruch 2, dadurch **gekennzeichnet**, daß als Kriterien für bestimmte Funktionen Entfernen des Mobilfunkgerätes vom Montageort, Abklemmen der Autobatterie-Dauerspannung oder die Unterbrechung von Überwachungskriterien dienen.

6. Mobilfunkgerät nach einem der Ansprüche 1 bis 5, dadurch **gekennzeichnet**, daß durch die initiierten Zusatzfunktionen Funktionen des Gerätes ganz oder teilweise geändert bzw. gesperrt werden.

## Claims

1. Mobile transceiver with additional functions which are initiated in a specific way and by means of which, given appropriate activation and appropriate criteria, radio traffic is started up with a defined called station, characterized by the implementation of an emergency call and reaction system such that when specific criteria, such as the activation of an emergency call key, the expiry of a prescribed signalling time or an impact sensor which is active, occur, a defined subscriber number is selected and transfer of data takes place.

2. Mobile transceiver having additional functions which are initiated in a specific way and by means of which, given appropriate activation and appropriate criteria, radio traffic is started up with a defined called station, characterized by the implementation of an anti-theft protection such that, after appropriate activation, the device calls up a defined telephone number when it is used with a number deviating from the permitted subscriber number and given specific criteria, and transmits information to this called station for the determination of data of the authorized and/or of the non-authorized user of the device.

3. Mobile transceiver according to Claim 2, characterized in that the activation of the anti-theft protection takes place by programming a code number in the device.

4. Mobile transceiver according to Claim 2, characterized in that the activation of the anti-theft protection takes place by means of specific software or hardware.

5. Mobile transceiver according to Claim 2, characterized in that removal of the mobile transceiver from the place of installation, disconnection of the continuous voltage of the car battery or the interruption of monitoring criteria serve as criteria for specific functions.

6. Mobile transceiver according to one of Claims 1 to 5, characterized in that functions of the device are modified entirely or partially or disabled by means of the initiated additional functions.

## Revendications

1. Emetteur-récepteur mobile avec des fonctions supplémentaires initiées de manière spécifique qui, lorsqu'elles sont activées de manière adéquate resp. lors de certains critères adéquats, permettent d'entrer en radiocommunication avec un poste correspondant défini, caractérisé par la réalisation d'un système d'appel d'urgence et de réaction de sorte qu'à l'apparition de certains signes, par exemple l'actionnement d'une touche d'appel d'urgence, l'expiration d'un temps de signalisation ou l'activation d'un capteur de choc, un numéro de correspondant défini est composé et un transfert de données est effectué.

2. Emetteur-récepteur mobile avec des fonctions supplémentaires initiées de manière spécifique qui, lorsqu'elles sont activées de manière adéquate resp. lors de certains critères adéquats, permettent d'entrer en radiocommunication avec un poste correspondant défini, caractérisé par la réalisation d'un système de protection antivol de sorte qu'après activation adéquate, l'appareil appelle en cas d'utilisation avec un numéro différent du numéro de correspondant autorisé, sous certains critères, un numéro de téléphone défini et transmet à ce poste correspondant des informations permettant de rechercher des données sur l'utilisateur autorisé et/ou non autorisé de l'appareil.

3. Emetteur-récepteur mobile selon la revendication 2, caractérisé en ce que la protection antivol est activée par programmation d'un numéro codé dans l'appareil.

4. Emetteur-récepteur mobile selon la revendication 2, caractérisé en ce que la protection antivol est activée au moyen de logiciels et matériels spéciaux.

5. Emetteur-récepteur mobile selon la revendication 2, caractérisé en ce que le retrait de l'émetteur-récepteur mobile de l'emplacement de montage, la déconnexion de la charge continue fournie par la batterie du véhicule ou l'interruption de critères de surveillance servent de critères pour certaines fonctions.

6. Emetteur-récepteur mobile selon l'une des revendications 1 à 5, caractérisé en ce que les fonctions supplémentaires initiées modifient ou bloquent entièrement ou en partie les fonctions de l'appareil.
